# EUROPEAN PATENT SPECIFICATION

(11) **EP 1 921 885 B1**
(45) Date of publication and mention of the grant of the patent: **30.09.2009**
(21) Application number: 08151874.8
(22) Date of filing: 18.03.2005
(51) Int. Cl.: H04W 4/00

(54) **Method of scanning wireless frequencies**
Verfahren zum Abtasten von Frequenzen
Procédé pour le balayage de fréquences

(43) Date of publication of application: 14.05.2008
(62) Divisional of application: 05102148.3
(73) Proprietor: Research In Motion Limited, Waterloo, Ontario N2L 3W8 (CA)
(72) Inventor: Vuong, Thanh Vinh, Kitchener, Ontario N2E 4B9 (CA); Alfano, Nicholas, Stratford-Upon-Avon, Warwickshire CV37 7 (GB)
(74) Representative: Patel, Binesh

(56) References cited:
- US-A1- 2004 218 605
- US-B1- 6 223 042
- US-B1- 6 564 055

## Description

This invention relates to the field of telecommunications and specifically to wireless devices coupled to communicate with wireless network systems.

The use of wireless or mobile communication devices has increased greatly in recent years. Mobile and cellular telephones have enabled mobile station users to roam over large geographic areas while maintaining immediate access to telephony services. Mobile stations include portable units, units installed in vehicles and fixed subscriber stations. Mobile stations comprising cellular telephones or wireless handsets are operable in cooperation with cellular, GSM and/or Personal Communications Services (PCS) communications systems among others. Cellular communication systems (wireless carriers) typically provide service to a geographic market area by dividing the area into many smaller areas or cells. Each cell is serviced by a radio transceiver (i.e., a transmitter-receiver base station or cell site). The cell sites or base stations may be connected to Mobile Telephone Switching Offices (MTSOs) or Mobile Switching Centers (MSCs) through landlines or other communication links, and the MTSOs may, in turn, be connected via landlines to the Public Switched Telephone Network (PSTN).

In a multi-service-provider wireless communication environment, such as a cellular network, multiple service providers or carriers may operate in a given geographic area, for example, a metropolitan area. Each carrier will have its own "geographic network" in that area, and will be assigned a unique operational "frequency" or "channel" (which may comprise multiple frequencies or a band of frequencies) for that geographic area. The service providers may have other geographic networks in other geographic areas. However, in those other geographic areas the service providers may be assigned different frequencies. Furthermore, cellular services in different parts of the world operate on different frequency bands. For example, North American cellular wireless networks typically operate in the 824MHz to 894MHz frequency band (often referred to as the 850MHz band) as well as the 1850MHz to 1990MHz frequency band (often referred to as the 1900MHz band). By contrast, Europe and Asia use the 900Mhz and 1800Mhz frequency bands.

When a mobile device, such as a GSM device, is taken to a different country, the device will attempt to locate its home network and will likely fail. The device will then scan for other networks that it is able to detect. Typically, frequency scanning when unable to locate the home network often requires a significant amount of time and can consume a significant amount of power, usually from the mobile device's battery.

Further, it is often preferable to scan for particular carrier frequencies when outside of the home network since different carriers have preferred arrangements with other carriers. U.S. Patent No. 6,397,064 to Bridges et al. describes an intelligent roaming system with over the air programming. Bridges et al. teaches a system comprising a database, a generator and a data providing device. The database stores preferred wireless carrier identities for a plurality of market areas. The generator generates a list of preferred wireless carrier identities and the list is transmitted to the wireless device by the data providing device.

U.S. Patent No. 6,223,042 to Raffel provides a method of intelligent roaming using network information. Raffel teaches a wireless device using a search schedule that has been optimized using network information, such as the last location of the device. The search schedule can then be optimized by predicting the next location of the device.

U.S. Patent No. 6,564,055 to Hronek teaches updating an intelligent roaming database (IRDB). Hronek discloses a method and apparatus to maintain different IRDBs or preferred roaming lists in a mobile handset. A wireless carrier code list is selected based on an individualized aspect of the device such as location or time of day. Movement of the wireless device to a new location may trigger a download of an updated roaming list.

A solution or an improved solution to one or more of the above problems is desired.

### GENERAL

According to one aspect of the invention, there may be provided a method of scanning frequencies for registration onto a wireless service provider by a wireless device comprising predefining priority sequences of frequencies each in association with one of a plurality of locations and storing the priority sequences on the wireless device; receiving and storing itinerary information on the wireless device; determining on the wireless device a current expected location of the wireless device in real-time based on the itinerary information; determining on the wireless device the priority sequence to be scanned based on the current expected location; and scanning frequencies according to the determined priority sequence.

According to another aspect of the invention, there may be provided a computer readable storage device storing statements and instructions for use in the execution in a computer of the methods of the invention. The computer readable storage device may preferably be located in a personal data assistant or a server.

According to another aspect of the invention, there may be provided a wireless device comprising the readable storage device of the invention.

According to another aspect of the invention, there is provided a wireless communications system comprising a wireless service provider and at least one wireless device according to the invention wirelessly connected to the wireless service provider by a wireless network system, said at least one wireless device being registered with said wireless service provider.

The itinerary information may comprise at least one expected location of the device at a date and time. Determining a current expected location of the device may occur on any one of power-up of the device, the device losing wireless signal, a trigger of an itinerary alarm and at the direction of a user. Determining the current expected location of the device may be dynamic. The at least one expected location may be outside of a home network of the device. The itinerary information may comprise at least one of arrival time, arrival date, arrival location, departure time, departure date, departure location, travel time, flight number, train number and check-in confirmation. The method may comprise retrieving current itinerary information in real-time and in response updating itinerary information. The itinerary information may be inputted into an electronic calendar system. The method may comprise predicting a date and time of at least one intermediate location according to the itinerary information. The itinerary information may be updated with the predicted date and time and the at least one intermediate location.

Foregoing and further aspects and features of the invention will be apparent from the appended claims.

### BRIEF DESCRIPTION OF THE DRAWINGS

Embodiments of the invention may best be understood by referring to the following description and accompanying drawings. In the description and drawings, like numerals refer to like structures or processes. In the drawings:

Figure 1 is a flowchart illustrating operations for scanning frequencies for registration onto a wireless service provider by a wireless device according to a first embodiment of the invention.

Figure 2 is a flowchart illustrating operations for scanning frequencies for registration onto a wireless service provider by a wireless device according to a second embodiment of the invention.

Figure 3 illustrates a graphical user interface for inputting an itinerary according to the first embodiment of the invention.

Figure 4 shows a mobile electronic device having a computer readable memory storing statements and instructions for use in the execution by a microprocessor of the methods of the invention.

### DESCRIPTION OF PREFERRED EMBODIMENTS

In the following description, numerous specific details are set forth to provide a thorough understanding of the invention. However, it is understood that the invention may be practiced without these specific details. In other instances, well-known software, circuits, structures and techniques have not been described or shown in detail in order not to obscure the invention.

*Method.* Generally, in accordance with an aspect of the invention, there is provided methods of scanning frequencies for registration onto a wireless service provider by a wireless device.

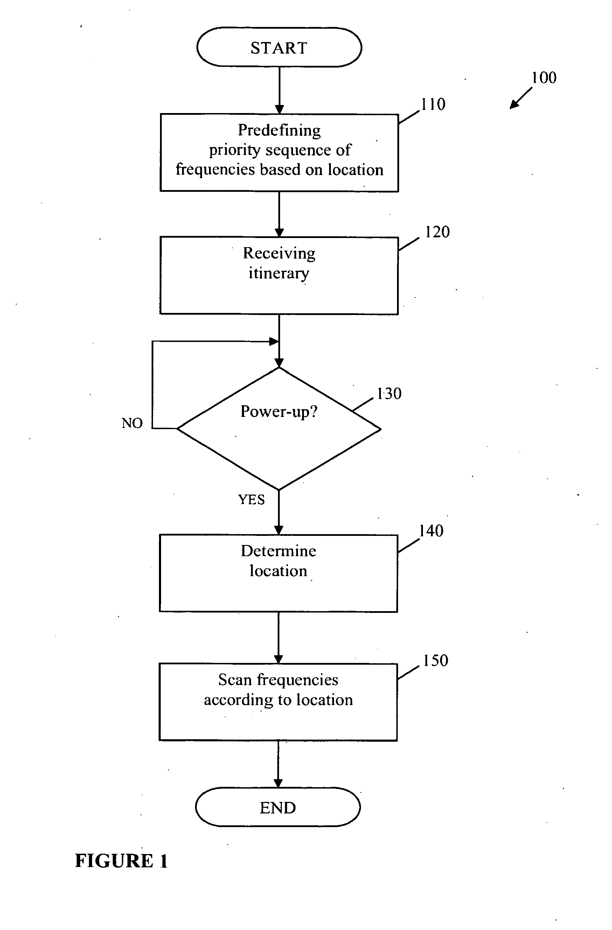

Referring to Figure 1, operations 100 for the scanning frequencies for registration onto a wireless service provider by a wireless device according to a first embodiment of this aspect of the invention are provided. At step 110, priority sequences of carrier frequencies are predefined based on location. For example, with respect to a GSM device, a sequence of carrier frequencies would be predefined for preferably every location in the world capable of providing GSM service. Location may be defined by city, state/province, region, country ... etc. Therefore, a priority sequence of carrier frequencies for London, England would comprise only carrier frequencies that operate in England, at present, typically within both the 900Mhz and 1800Mhz band for GSM devices. Out of those carrier frequencies within the 900Mhz and 1800Mhz bands, carrier frequencies may be deemed more preferable would correspondingly have a higher priority in the sequence, for example, those frequencies used by carriers or subscribers that have an advantageous partnering agreement with a user's home network. The priority sequence of carrier frequencies is typically predefined by a user's home carrier and downloaded to the user's mobile device, although it is also possible for a user to predefine the priority sequence or modify a predefined priority sequence.

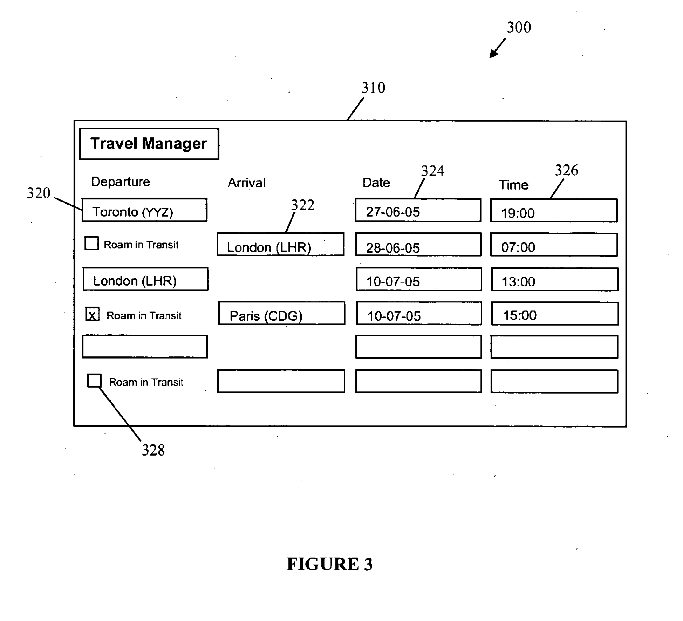

At step 120, a travel itinerary is received. The itinerary information is typically inputted by a user. The itinerary information comprises at least one location of the device at a date and time. Preferably, the at least one location is outside of the device's home network. Referring to Figure 3, a graphical user interface (GUI) 310 is shown for entering an itinerary which is partially filled in. The GUI comprises departure fields 320, arrival fields 322, date fields 324, time fields 326 and a "roam in transit" checkbox. For example, if the user is a resident of Toronto, Canada and will travel to London, England and then on to Paris France, the user would enter his/her travel information into GUI 310 as illustrated. Departure and arrival locations are entered into departure fields 320 and arrival fields 322 respectively. Arrival and departure dates are entered into date fields 324. Arrival and departure times are entered into time fields 326. Preferably, once an itinerary has been received by the mobile device, the device then downloads the priority sequence of carrier frequencies for those locations entered into the itinerary, since to store all possible priority sequences for all possible locations on the wireless device itself would likely require a significant amount of memory.

The itinerary information is preferably received directly through a GUI on the wireless device but the GUI could also be accessible on the World Wide Web via the Internet. Alternatively, a user could call or e-mail in the itinerary information and have it be entered on a server side application at the home service provider. The itinerary information would be then received by download to the wireless device. It will be understood by a skilled worker that a user may use any number of interfaces known in the art to input an itinerary which is then received or downloaded by the wireless device.

If the device is powered-up at step 130, at step 140, a current expected location of the wireless device is determined based on the itinerary information. Power-up could include a general power-up of the device or the activation of the device's communication subsystem (i.e. antenna). At power-up, the device determines whether the current date and time, for example, according the device's internal clock, is during a period during which the user has indicated that he would be outside of his home network according to the itinerary. Therefore, in respect of the itinerary illustrated in Figure 3, if the device is powered up on June 30, 2005 at 00:00, the device would determine that according to the current date, current time and the itinerary, the current expected location of the device is London, England.

Although step 140 is preferably performed only following power-up at step 130, a skilled worker would understand that the determination may also be made whenever the device loses wireless signal, at the direction of the user or dynamically. Alternatively, the determination at step 140 could be performed following the trigger of an itinerary alarm by the current date and current time. For example, referring to the example itinerary in Figure 3, at 07:00 on June 28, 2005, an itinerary alarm could be triggered which would alert the device to perform step 140 to determine the current expected location.

At step 150, the device scans for carrier frequencies according to the priority sequence defined for the current expected location. Therefore, in respect of the above example, after the device has determined that the current expected location is London, England according to the current date, current time and itinerary, the device begins scanning carrier frequencies according to the priority sequence predefined in step 110. As the predefined priority sequence of carrier frequencies only includes European GSM frequencies and more particularly those used by preferred English carriers, chances of the device registering onto an acceptable carrier more quickly are improved. Correspondingly, quicker registration onto an acceptable carrier uses less battery power.

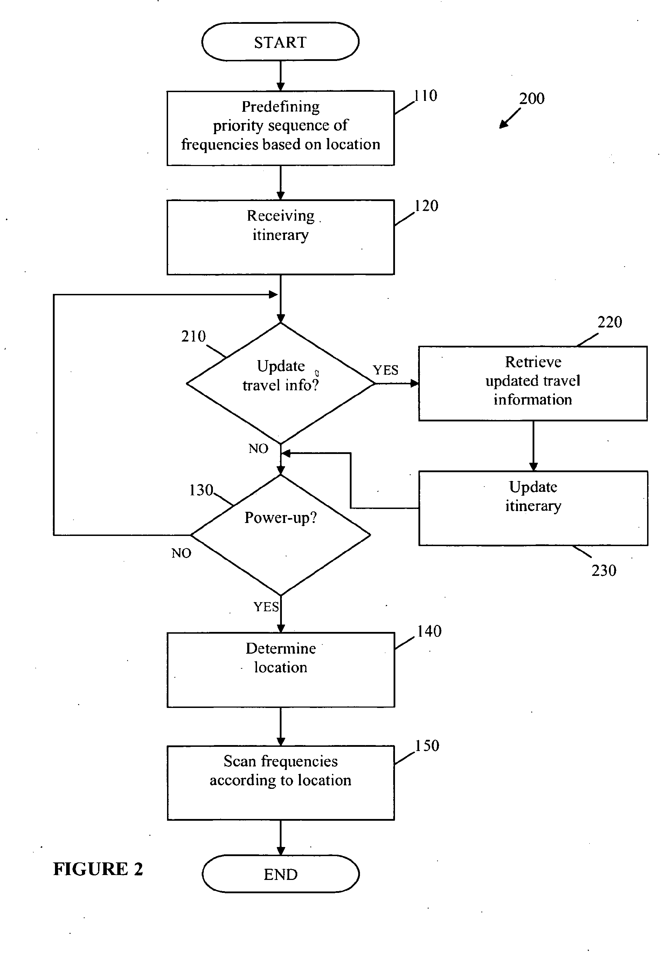

The invention will now be described with respect to a second embodiment of the invention. Referring to Figure 2, operations 200 are provided according to the second embodiment of the invention. Additional steps 210, 220 and 230 are provided. In this embodiment, the itinerary information received at step 120 comprises specific travel information such as, for example, flight numbers, flight times and estimated flying times. If it is determined that the travel information is to be updated at step 210, then operations 200 will proceed to retrieve updated travel information, if available, at step 220. Updated travel information is preferably retrieved wirelessly through a network with which the device is coupled to communicate.

At step 230, the itinerary is updated with the updated travel information. A more accurate itinerary therefore allows for more accurate timing as to when the device would determine that it is outside of a home network and should scan for carrier frequencies according to a priority sequence for a new location. For example, if the user inputs a flight number or a train number into the itinerary, then the device could update the itinerary with any changes to the flight or train information, such as, for example, if the flight is delayed.

In another embodiment of the invention, a user may choose to roam while in transit. Referring to Figure 3, a user may choose to check "roam in transit" checkbox 328. In this embodiment, the device maps a route from the departure point to the arrival point and approximates the time at which the device would be at various destinations along the route. For example, if a user were travelling from Paris, France to Berlin, Germany by train, the device may be adapted to download the train route as well as the estimated date and time at various intermediate destinations along the route, preferably according to the schedule of stops along the route. Therefore, if this option is chosen, the device may be configured to automatically generate a sub-itinerary comprising departure and arrival dates and times for various intermediate locations along the route. The device is then capable of scanning frequencies pursuant to priority sequences for the locations along the route, preferably when losing signal from country to country and the device is required to rescan for preferable frequencies. Similarly, the roam in transit option can be used when travelling by air. For example, a traveller may turn off the device prior to boarding a flight from Toronto, Canada to Hong Kong, the device may download the flight schedule which contains a stop over in Anchorage, Alaska. Therefore, if the device is powered up during the stop-over, it will scan frequencies according to priority sequences defined for Anchorage, Alaska.

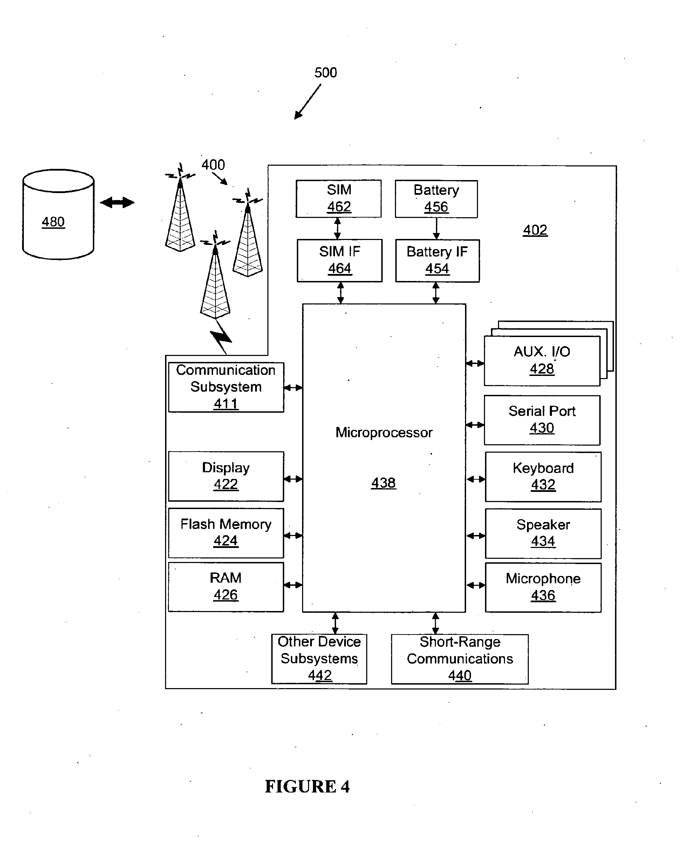

*Device and Memory.* Referring to Figure 4, a mobile electronic device 402 in system 500 is shown. The mobile electronic device 402 is preferably a two-way communication device having at least voice and advanced data communication capabilities, including the capability to communicate with other computer systems. Depending on the functionality provided by mobile electronic device 402, it may be referred to as a data messaging device, a two-way pager, a cellular telephone with data messaging capabilities, a wireless Internet appliance, or a data communication device (with or without telephony capabilities). Mobile electronic device 402 may communicate via a network 400, in this embodiment, any one of a plurality of transceiver stations.

Mobile electronic device 402 will normally incorporate a communication subsystem 411, which includes a receiver, a transmitter, and associated components, such as one or more (preferably embedded or internal) antenna elements and, local oscillators (LOs), and a processing module such as a digital signal processor (DSP) (all not shown). As will be apparent to those skilled in field of communications, particular design of communication subsystem 411 depends on the communication network in which mobile electronic device 402 is intended to operate.

Network access is associated with a subscriber or user of mobile electronic device 402 and therefore mobile electronic device 402 requires a Subscriber Identity Module or "SIM" card 462 to be inserted in a SIM IF 464 in order to operate in the network. Mobile electronic device 202 is a battery-powered device so it also includes a battery IF 454 for receiving one or more rechargeable batteries 456. Such a battery 456 provides electrical power to most if not all electrical circuitry in mobile electronic device 402, and battery IF 454 provides for a mechanical and electrical connection for it. The battery IF 454 is coupled to a regulator (not shown) which provides power V+ to all of the circuitry.

Mobile electronic device 402 includes a controller such as a microprocessor 438 which controls overall operation of mobile electronic device 402. Communication functions, including at least data and voice communications, are performed through communication subsystem 411. Microprocessor 438 also interacts with additional device subsystems such as a display 422, a flash memory 424, a random access memory (RAM) 426, auxiliary input/output (I/O) subsystems 428, a serial port 430, a keyboard 432, a speaker 434, a microphone 436, a short-range communications subsystem 440, and any other device subsystems generally designated at 442. Some of the subsystems shown in Figure 4 perform communication-related functions, whereas other subsystems may provide "resident" or on-device functions. Notably, some subsystems, such as keyboard 432 and display 422, for example, may be used for both communication-related functions, such as entering a text message for transmission over a communication network, and device-resident functions such as a calculator or task list. Operating system software used by microprocessor 438 is preferably stored in a persistent store such as flash memory 424, which may alternatively be a read-only memory (ROM) or similar storage element (not shown). Those skilled in the art will appreciate that the operating system, specific device applications, or parts thereof, may be temporarily loaded into a volatile store such as RAM 426.

Microprocessor 438, in addition to its operating system functions, preferably enables execution of software applications on mobile electronic device 402. A predetermined set of applications which control basic device operations, including at least data and voice communication applications, will normally be installed on mobile electronic device 402 during its manufacture. A preferred application that may be loaded onto mobile electronic device 402 may be a personal information manager (PIM) application having the ability to organize and manage data items relating to the user such as, but not limited to, instant messaging (IM), e-mail, calendar events, voice mails, appointments, and task items. The PIM application would be capable of being stored in a persistent store such as flash memory 424, ROM or similar storage element, or in a volatile store such as RAM426. The PIM application would comprise the statements and instructions corresponding to the methods of the invention, such as operation 100, 200 for use in the execution by Microprocessor 438. Naturally, one or more memory stores are available on mobile electronic device 402 and SIM 462 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile electronic device user's corresponding data items stored and/or associated with a host computer system thereby creating a mirrored host computer on mobile electronic device 402 with respect to such items. This is especially advantageous where the host computer system is the mobile electronic device user's office computer system. Additional applications may also be loaded onto mobile electronic device 402 through network 400, an auxiliary I/O subsystem 428, serial port 430, short-range communications subsystem 440, or any other suitable subsystem 442, and installed by a user in RAM 426 or preferably a non-volatile store (not shown) for execution by microprocessor 438. Such flexibility in application installation increases the functionality of mobile electronic device 402 and may provide enhanced on-device functions, communication-related functions, or both. For example, secure communication applications may enable electronic commerce functions and other such financial transactions to be performed using mobile electronic device 402.

In a data communication mode, a received signal such as a text message, an e-mail message, or web page download will be processed by communication subsystem 411 and input to microprocessor 438. Microprocessor 438 will preferably further process the signal for output to display 422, to auxiliary I/O device 428 or both. A user of mobile electronic device 402 may also compose data items, such as e-mail messages, for example, using keyboard 432 in conjunction with display 422 and possibly auxiliary I/O device 428. Keyboard 432 is preferably a telephone type keypad, full alphanumeric keyboard or full or condensed QWERTY keypad. These composed items may be transmitted over a communication network through communication subsystem 411.

For voice communications, the overall operation of mobile electronic device 402 is substantially similar, except that the received signals would be output to speaker 434 and signals for transmission would be generated by microphone 436. Alternative voice or audio I/O subsystems, such as a voice message recording subsystem, may also be implemented on mobile electronic device 402. Although voice or audio signal output is preferably accomplished primarily through speaker 434, display 422 may also be used to provide an indication of the identity of a calling party, duration of a voice call, or other voice call related information, as some examples.

Serial port 430 in Figure 4 is normally implemented in a personal digital assistant (PDA)-type communication device for which synchronization with a user's desktop computer is a desirable, albeit optional, component. Serial port 430 enables a user to set preferences through an external device or software application and extends the capabilities of mobile electronic device 402 by providing for information or software downloads to mobile electronic device 402 other than through a wireless communication network. The alternate download path may, for example, be used to load an encryption key onto mobile electronic device 402 through a direct and thus reliable and trusted connection to thereby provide secure device communication.

Short-range communications subsystem 440 of Figure 4 is an additional optional component which provides for communication between mobile electronic device 402 and different systems or devices, which need not necessarily be similar devices. For example, subsystem 240 may include an infrared device and associated circuits and components, or a Bluetooth^{™} communication module to provide for communication with similarly-enabled systems and devices. Bluetooth^{™} is a registered trademark of Bluetooth SIG, Inc.

In accordance with an embodiment of the invention, mobile electronic device 402 is configured for sending and receiving data items and includes a PIM for organizing and managing data items relating to the user such as, but not limited to, instant messaging (IM), e-mail, calendar events, calendar appointments, and task items, etc. By way of example, mobile electronic device 402 is configured for voice (which may include push to talk over cellular (POC)) and data services, voice mail service, e-mail service, SMS and chat services to which the user subscribes. To provide a user-friendly environment to control the operation of mobile electronic device 402, PIM together with the operation system and various software applications resident on the station 402 provides a GUI having a main screen from which to access various services via applications stored on said device or available to it.

Electronic device 402 is coupled to communicate thought network 400 to an outside memory 480. Outside memory 480 may be server from which a priority sequence of carrier frequencies for specific locations can be downloaded. Alternatively, outside memory 480 may be server from which flight information or train information may be downloaded, such as, for example, updated schedules and route information.

*Data Carrier Product.* The sequences of instructions which when executed cause the methods described herein to be performed can be contained in a data carrier product for transmission such as embodied in a carrier wave according to one embodiment of the invention.

*Computer Software Product.* The sequences of instructions which when executed cause the methods described herein to be performed can be contained in a computer software product according to one embodiment of the invention. This computer software product can be loaded into and run by device 402.

*Integrated Circuit Product.* The sequences of instructions which when executed cause the methods described herein to be performed can be contained in an integrated circuit product including a coprocessor or memory according to one embodiment of the invention. This integrated circuit product can be installed in device 402.

It will be understood by a skilled worker that although the methods and devices of the present invention are described largely with respect to GSM, the methods and devices of the present invention are not limited thereto. Thus, priority scanning based on a travel or destination itinerary may be modified in known ways by a person skilled in the art to apply to any wireless device coupled to communicate with networks using specific frequencies.

Although preferred embodiments of the invention have been described herein, it will be understood by those skilled in the art that variations may be made thereto within the scope of the appended claims.

## Claims

1. A method of scanning frequencies for registration onto a wireless service provider by a wireless device (402) comprising:
predefining priority sequences of frequencies each in association with one of a plurality of locations and storing the priority sequences on the wireless device (402);
receiving and storing itinerary information on the wireless device (402);
determining on the wireless device (402) a current expected location of the wireless device (402) in real-time based on the itinerary information;
determining on the wireless device (402) the priority sequence to be scanned based on the current expected location; and
scanning frequencies according to the determined priority sequence.

2. The method of claim 1, wherein the itinerary information comprises at least one expected location of the wireless device (402) at a date and time.

3. The method of claim 1 or claim 2, wherein determining a current expected location of the wireless device (402) occurs on any one of power-up of the device, the device losing wireless signal, a trigger of an itinerary alarm and at the direction of a user.

4. The method of any one of claims 1 to 3, wherein determining the current expected location of the wireless device (402) is dynamic.

5. The method of claim 2, wherein the at least one expected location is outside of a home network (400) of the wireless device (402).

6. The method of any one of claims 1 to 5, wherein the itinerary information comprises at least one of arrival time, arrival date, arrival location, departure time, departure date, departure location, travel time, flight number, train number and check-in confirmation.

7. The method of claim 6, comprising retrieving current itinerary information in real-time and in response updating itinerary information.

8. The method of any one of claims 1 to 7, wherein the itinerary information is inputted into an electronic calendar system.

9. The method of any one of claims 1 to 8, comprising predicting a date and time of at least one intermediate location according to the itinerary information.

10. The method of claim 9, wherein the itinerary information is updated with the predicted date and time and the at least one intermediate location.

11. A computer readable storage device (424) storing statements and instructions for use in the execution in a computer of the method of any one of claims 1 to 10.

12. A wireless device (402) comprising the readable storage device (424) of claim 11.

13. A wireless communications system (500) comprising a wireless service provider and at least one wireless device (402) according to claim 12 wirelessly connected to said wireless service provider by a wireless network system (400), said at least one wireless device (402) being registered with said wireless service provider.

## Patentansprüche

1. Verfahren zum Abtasten von Frequenzen zur Registrierung auf einem Drahtlosdienstanbieter durch ein Drahtlosgerät (402), das Verfahren umfassend:
das Vordefinieren von Prioritätssequenzen von Frequenzen, die jeweils im Zusammenhang mit einem aus einer Mehrzahl von Standorten stehen, und das Speichern der Prioritätssequenzen auf dem Drahtlosgerät (402);
das Empfangen und Speichern von Reiserouteninformationen auf dem Drahtlosgerät (402);
das Ermitteln auf dem Drahtlosgerät (402) eines aktuellen erwarteten Standorts des Drahtlosgeräts (402) in Echtzeit basierend auf den Reiserouteninformationen;
das Ermitteln auf dem Drahtlosgerät (402) der abzutastenden Prioritätssequenz basierend auf dem aktuellen erwarteten Standort; und
das Abtasten von Frequenzen gemäß der ermittelten Prioritätssequenz.

2. Verfahren gemäß Anspruch 1, wobei die Reiserouteninformationen mindestens einen erwarteten Standort des Drahtlosgeräts (402) zu einem Datum und einer Uhrzeit umfassen.

3. Verfahren gemäß Anspruch 1 oder Anspruch 2, wobei das Ermitteln eines aktuellen erwarteten Standorts des Drahtlosgeräts (402) in jeder der folgenden Situationen erfolgt: beim Einschalten des Geräts; beim Verlust des Drahtlossignals durch das Gerät; beim Auslösen eines Reiseroutenalarms und bei entsprechender Anweisung eines Benutzers.

4. Verfahren gemäß einem der Ansprüche 1 bis 3, wobei das Ermitteln des aktuellen erwarteten Standorts des Drahtlosgeräts (402) dynamisch erfolgt.

5. Verfahren gemäß Anspruch 2, wobei sich der mindestens eine erwartete Standort außerhalb eines Heimnetzwerks (400) des Drahtlosgeräts (402) befindet.

6. Verfahren gemäß einem der Ansprüche 1 bis 5, wobei die Reiserouteninformationen mindestens eines des Folgenden umfasst: Ankunftszeit, Ankunftsdatum, Ankunftsstandort, Abreisezeit, Abreisedatum, Abreisestandort, Reisezeit, Flugnummer, Zugnummer und Eincheck-Bestätigung.

7. Verfahren gemäß Anspruch 6, umfassend das Abrufen aktueller Reiserouteninformationen in Echtzeit und als Reaktion darauf das Aktualisieren der Reiserouteninformationen.

8. Verfahren gemäß einem der Ansprüche 1 bis 7. wobei die Reiserouteninformationen in ein elektronisches Kalendersystem eingegeben werden.

9. Verfahren gemäß einem der Ansprüche 1 bis 8, umfassend das Vorhersagen eines Datums und einer Zeit von mindestens einem Zwischenstandort gemäß den Reiserouteninformationen.

10. Verfahren gemäß Anspruch 9, wobei die Reiserouteninformationen mit dem vorhergesagten Datum und der vorhergesagten Zeit und dem mindestens einen Zwischenstandort aktualisiert werden.

11. Computerlesbares Speichermedium (424), auf dem Anweisungen und Befehle zur Verwendung bei der Ausführung in einem Computer nach dem Verfahren gemäß einem der Ansprüche 1 bis 10 gespeichert sind.

12. Drahtlosgerät (402), umfassend das lesbare Speichermedium (424) gemäß Anspruch 11.

13. Drahtloskommunikationssystem (500), umfassend einen Drahtlosdienstanbieter und mindestens ein Drahtlosgerät (402) gemäß Anspruch 12, das über ein Drahtlosnetzwerksystem (400) drahtlos mit dem Drahtlosdienstanbieter verbunden ist, wobei das mindestens eine Drahtlosgerät (402) bei dem Drahtlosdienstanbieter registriert ist.

## Revendications

1. Un procédé pour balayer des fréquences pour un enregistrement sur un fournisseur de services sans fil par un dispositif sans fil (402) comportant les étapes visant à :
prédéfinir des séquences de priorité de fréquences chacune en association avec une localisation parmi une pluralité de localisations et stocker les séquences de priorité sur le dispositif sans fil (402) ;
recevoir et stocker des informations d'itinéraire sur le dispositif sans fil (402) ;
déterminer sur le dispositif sans fil (402) une localisation attendue actuelle du dispositif sans fil (402) en temps réel sur la base des informations d'itinéraire ;
déterminer sur le dispositif sans fil (402) la séquence de priorité à balayer sur la base de la localisation attendue actuelle ; et
balayer les fréquences selon la séquence de priorité déterminée.

2. Le procédé de la revendication 1, où les informations d'itinéraire comportent au moins une localisation attendue du dispositif sans fil (402) à une date et une heure.

3. Le procédé de la revendication 1 ou de la revendication 2, où l'étape visant à déterminer une localisation attendue actuelle du dispositif sans fil (402) se produit à n'importe quelle occurrence parmi une mise sous tension du dispositif, une perte de signal sans fil du dispositif, un déclenchement d'une alarme d'itinéraire et une instruction de l'utilisateur.

4. Le procédé de n'importe laquelle des revendications 1 à 3, où l'étape visant à déterminer la localisation attendue actuelle du dispositif sans fil (402) est dynamique.

5. Le procédé de la revendication 2, où l'au moins une localisation attendue est en dehors d'un réseau domestique (400) du dispositif sans fil (402).

6. Le procédé de n'importe laquelle des revendications 1 à 5, où les informations d'itinéraire comportent au moins un élément parmi une heure d'arrivée, une date d'arrivée, une localisation d'arrivée, une heure de départ, une date de départ, une localisation de départ, une durée de voyage, un numéro de vol, un numéro de train et une confirmation d'enregistrement.

7. Le procédé de la revendication 6, comportant la récupération des informations d'itinéraire actuelles en temps réel et en réponse la mise à jour des informations d'itinéraire.

8. Le procédé de n'importe laquelle des revendications 1 à 7, où les informations d'itinéraire sont entrées dans un système de calendrier électronique.

9. Le procédé de n'importe laquelle des revendications 1 à 8, comportant la prédiction d'une date et d'une heure d'au moins une localisation intermédiaire selon les informations d'itinéraire.

10. Le procédé de la revendication 9, où les informations d'itinéraire sont mises à jour avec la date et l'heure prédites et l'au moins une localisation intermédiaire.

11. Un dispositif de stockage lisible par ordinateur (424) stockant des énoncés et des instructions pour une utilisation dans l'exécution dans un ordinateur du procédé de n'importe laquelle des revendications 1 à 10.

12. Un dispositif sans fil (402) comportant le dispositif de stockage lisible (424) de la revendication 11.

13. Un système de communication sans fil (500) comportant un fournisseur de services sans fil et au moins un dispositif sans fil (402) selon la revendication 12 connecté de façon non filaire audit fournisseur de services sans fil par un système de réseau sans fil (400), ledit au moins un dispositif sans fil (402) étant enregistré auprès dudit fournisseur de services sans fil.
